# EUROPEAN PATENT APPLICATION

(11) **EP 4 394 682 A1**
(43) Date of publication of application: **03.07.2024**
(21) Application number: 23199377.5
(22) Date of filing: 25.09.2023
(51) Int. Cl.: G06Q 20/38

(54) **TRADE PROCESSING PROGRAM, METHOD FOR PROCESSING TRADE, AND INFORMATION PROCESSING APPARATUS**

(30) Priority: 28.12.2022 JP 2022212717
(71) Applicant: FUJITSU LIMITED, Kawasaki-shi, Kanagawa 211-8588 (JP)
(72) Inventor: Nishimaki, Satoru, Kawasaki-shi, Kanagawa, 211-8588 (JP)
(74) Representative: Hoffmann Eitle

(57) **Abstract**

A trade processing program causes a computer of each of nodes manage a distributed ledger related to a financial asset to execute a process including registering, in the distributed ledger, authorization transactions, the authorization transactions each including a transfer source account, a transfer destination account, a transfer amount of the financial asset, and a transfer time of the financial asset, and the authorization transactions each authorizing transfer of the financial asset based on a request from the transfer source account of the financial asset, for an authorization transaction out of the registered authorization transactions for which a self node manages the transfer destination account, requesting a first other node to verify the authorization transaction after a management time managed by the self node has reached a transfer time included in the authorization transaction, and issuing a request transaction that requests transfer of a financial asset related to the authorization transaction based on a result of the verification performed by the first other node, and returning, in a case where a request for verification of the authorization transaction is accepted from a second other node, to the second other node a result of the verification of whether the transfer time included in the authorization transaction is later than the management time.

## Description

### FIELD

The embodiment discussed herein is related to a trade processing program, a method for processing a trade, and an information processing apparatus.

### BACKGROUND

Today, a decentralized finance (DeFi), which is a distributed-type finance different from a centralized finance brokered by banks and securities companies, becomes a focus of attention. Since the DeFi is a mechanism in which the safety of trades is ensured by the entire community without a central administrator, it is expected that the liquidity of the market is improved by unmanned brokerage of trades and autonomous operation.

To construct a system of the DeFi, application of a blockchain (also referred to as "BC" or "distributed ledger" hereinafter) is considered. As one of approaches to the application of the BC, studies for realizing a financial system (also referred to as "trade system" hereinafter) using tokens issued in the BC have started.

U.S. Patent Application Publication No. 2022/0058641, Japanese National Publication of International Patent Application No. 2019-514089, and Japanese National Publication of International Patent Application No. 2020-524425 are disclosed as related art.

### PROBLEMS

Usually, in a financial system, money and bonds are transferred with a date designated for redemption of bonds, payment of dividends, and the like. In contrast, it is assumed that, in the blockchain (BC), a plurality of nodes asynchronously execute processes. Accordingly, there is a barrier to realizing a financial system using the BC in that appropriate performance of processes or trades for which particular times are designated is difficult.

In one aspect, it is an object to provide a trade processing program, a method for processing a trade, and an information processing apparatus with which a trade for which a particular time is designated may be appropriately performed.

### [Effects of Invention]

A trade for which a particular time is designated may be appropriately performed.

### SUMMARY

According to an aspect of the embodiments, a trade processing program causes a computer of each of nodes manage a distributed ledger related to a financial asset to execute a process including registering, in the distributed ledger, authorization transactions, the authorization transactions each including a transfer source account, a transfer destination account, a transfer amount of the financial asset, and a transfer time of the financial asset, and the authorization transactions each authorizing transfer of the financial asset based on a request from the transfer source account of the financial asset, for an authorization transaction out of the registered authorization transactions for which a self node manages the transfer destination account, requesting a first other node to verify the authorization transaction after a management time managed by the self node has reached a transfer time included in the authorization transaction, and issuing a request transaction that requests transfer of a financial asset related to the authorization transaction based on a result of the verification performed by the first other node, and returning, in a case where a request for verification of the authorization transaction is accepted from a second other node, to the second other node a result of the verification of whether the transfer time included in the authorization transaction is later than the management time.

### BRIEF DESCRIPTION OF DRAWINGS

FIG. 1 is an explanatory diagram illustrating an overview of an embodiment;
FIG. 2 is an explanatory diagram illustrating examples of a token transfer methods;
FIG. 3 is a block diagram illustrating an example of a hardware configuration of an information processing apparatus according to the embodiment;
FIG. 4 is an explanatory diagram illustrating an example of an entire configuration of a trade system according to the embodiment;
FIG. 5 is an explanatory diagram illustrating an example of data registered in a blockchain (BC) ledger;
FIG. 6A is a flowchart illustrating an example of processing for a withdrawal registration;
FIG. 6B is the flowchart illustrating the example of the processing for the withdrawal registration;
FIG. 7 is an explanatory diagram illustrating an example of the data registered in the BC ledger;
FIG. 8 is an explanatory diagram illustrating an example of the data registered in the BC ledger;
FIG. 9A is a flowchart illustrating an example of processing for a withdrawal wait/withdrawal execution;
FIG. 9B is the flowchart illustrating the example of the processing for the withdrawal wait/withdrawal execution;
FIG. 10 is an explanatory diagram illustrating an example of the data registered in the BC ledger;
FIG. 11 is a flowchart illustrating an example of a case where the withdrawal request fails;
FIG. 12A is a flowchart illustrating an example of processing for retransmission of a withdrawal request;
FIG. 12B is the flowchart illustrating the example of the processing for the retransmission of the withdrawal request;
FIG. 13 is an explanatory diagram illustrating an example of the data registered in the BC ledger;
FIG. 14 is an explanatory diagram illustrating an example of the data registered in the BC ledger;
FIG. 15A is a flowchart illustrating an example of processing for the withdrawal registration;
FIG. 15B is the flowchart illustrating the example of the processing for the withdrawal registration;
FIG. 16 is an explanatory diagram illustrating an example of the data registered in the BC ledger;
FIG. 17A is a flowchart illustrating an example of processing for a withdrawal wait/withdrawal execution;
FIG. 17B is the flowchart illustrating the example of the processing for the withdrawal wait/withdrawal execution; and
FIG. 18 is an explanatory diagram illustrating an example of the data registered in the BC ledger.

### DESCRIPTION OF EMBODIMENTS

Hereinafter, a trade processing program, a method for processing a trade, and an information processing apparatus according to an embodiment will be described with reference to the drawings. In the embodiment, elements having the same functions are denoted by the same reference numerals, thereby omitting redundant description thereof. The trade processing program, the method for processing a trade, and the information processing apparatus described according to the following embodiment are merely exemplary and do not limit the embodiment. Portions of the embodiment below may be appropriately combined as long as the portions do not contradict each other.

### (Related Art and Tasks)

As a mechanism of a trade for which a time is designated in a blockchain, there is Ethereum alarm clock (https://www.ethereum-alarm-clock.com/). With this Ethereum alarm clock, first, a trade is registered in a Time node that manages a transaction for which time is designated. After that, the Time node sequentially checks a current time and a trade list and issues a transaction of a trade for which the designated time is reached, thereby executing the trade at the designated time.

In a mechanism of a trade for which time is designated in a blockchain, there is a schedule execution method using time encryption (Japanese National Publication of International Patent Application No. 2020-524425, COMPUTER-IMPLEMENTED SYSTEM AND METHOD FOR TIME RELEASE ENCRYPTION OVER A BLOCKCHAIN NETWORK). According to this method, a token receiver is caused to solve a time-lock puzzle that takes a certain period of time for decryption, and when that encryption is successfully decrypted, a private key desired for issuing a transaction for token transfer is released to allow transfer of a fund.

In the above-described mechanism of a trade for which time is designated in a blockchain, a scheduling function that manages issuing of transactions is provided inside and outside the blockchain, thereby the trade at the designated time is realized. Computer processing usually executes processes with the scheduling function. The processing assumes that a time at which a process is executed with the scheduling function is trusted. For this reason, when the scheduling function is attacked by a malicious user, an other node may perform processing of a transaction even when a designated time has not been reached for the trade, and the trade may be authorized.

A problem here is that, due to the processing in which time data that serves as the trigger is entirely trusted, the time is not necessarily verified in a BC node that perform the trade. Since the vulnerability of a trade for which time information held by a particular node is assumed to be trusted increases, it is desirable to determine the trade by the entirety of the BC.

In view of the above-described problem, one of tasks to be solved by the present embodiment is that "in a time-designated trade in the blockchain, the trade is discarded in a case where a transaction is issued at a time other than the designated time and execution and a result of the trade at the designated time-designated time are ensured".

From the viewpoint of verifying a time at which a trade is executed in a node that verifies a transaction, there is related art in which verification is performed by using the latest timestamp of block data as in U.S. Patent Application Publication No. 2022/0058641, "DEVICE AND METHOD FOR PROCESSING DATA OF TRANSACTIONS BASED ON BLOCK CHAIN, AND STORAGE MEDIUM".

However, the timestamp of the block data is the time at which a miner records the block data, and the verification in the record of the timestamp only determines whether the time is later than the timestamp of the previous block. Although it may be verified that, for example, there is no difference in a longer period of time than a certain period of time from the timestamp of the previous block in some cases depending on the types of blockchain, there is no sufficient verification in terms of accuracy. Thus, one of the tasks to be solved by the present embodiment is not solved since execution of a transaction at a time at which the transaction is normally desired to be executed is not sufficiently ensured due to a large difference between the timestamp of the block data and the current time.

A method for handling time information in the blockchain is described. Each of the nodes participating in the blockchain sets the current time by, for example, being synchronized with a time server.

Thus, many nodes operate at relatively accurate time (although the time is not completely accurate, the accurate time is set in a range of a deviation of about milliseconds to several seconds). However, since the times of the nodes are not completely synchronized with each other, a slight time deviation occurs in each node.

A malicious user or the like may intentionally set the time with deviation. In the case of the bitcoin, even when the miner intentionally causes the time to deviate, the block is accepted unless the time is set to a significantly abnormal time in the system (the reason for it is that, since it is assumed that there is deviation in time, ensuring accuracy of all the node is impossible).

From the above, in the blockchain, it is difficult to execute processing by referring to common time information. As in U.S. Patent Application Publication No. 2022/0058641 described above, the timestamp of the block data is time information shared by all the nodes. However, there is a possibility that the trade is not executed at the time as designated by the sender because it is not ensured that the time is accurate.

### (Overview of Embodiment)

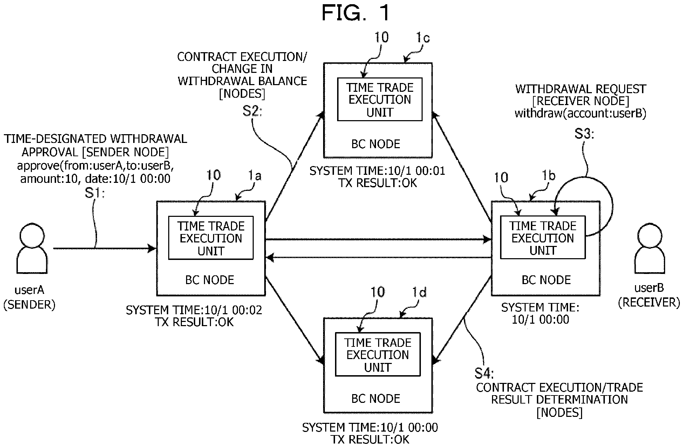

FIG. 1 is an explanatory diagram illustrating an overview of the embodiment. As illustrated in FIG. 1, a trade system according to the embodiment includes a plurality of blockchain (BC) nodes 1a to 1d that share and manage a BC ledger related to a financial asset (hereinafter, also referred to as a "token"). Each of the BC nodes 1a to 1d includes a time trade execution unit 10 that executes a trade based on a transaction for which a particular time is designated. In the following description, in a case where the BC nodes 1a to 1d are not particularly distinguished from each other, they are simply referred to as BC nodes 1.

The BC node 1a is a node that manages an account of "userA" (hereafter also referred to as a "sender node") exemplifying a transfer source account (hereafter also referred to as a "sender") of a financial asset. The BC node 1b is a node that manages an account of "userB" (hereafter also referred to as a "receiver node") exemplifying a transfer destination account (hereafter also referred to as a "receiver") of the financial asset. BC Nodes 1c and 1d are nodes that manage accounts other than the accounts of "userA" and "userB".

In the trade system according to the embodiment, a token transfer process is realized by a smart contract using a blockchain technique. The token transfer process may be executed by all the BC nodes 1a to 1d participating in a blockchain network. The result of the token transfer process may be verified by all the BC nodes 1a to 1d participating in the blockchain network.

First, in the BC node 1a as the sender node, based on a request of the sender (userA), a transaction (time-designated withdrawal approval) that authorizes (approves) transfer of a financial asset is issued (S1). After the issued transaction is authorized by each BC node, the transaction is registered in the BC ledger of each BC node (S2).

The time-designated withdrawal approval (approve ()) includes "from" indicating the account of the sender, "to" indicating the account of the receiver, "amount" indicating a token amount (transfer amount) approved to be withdrawn, and "date" indicating the time (transfer time) at which the withdrawal is allowed. The time-designated withdrawal approval indicates that the withdrawal is allowed at or later than the time indicated by "date" and indicates that a trade of the withdrawal fails at or earlier than the time indicated by "date".

The BC node 1b as the receiver node requests, with respect to a trade of the time-designated withdrawal approval corresponding to a receiver (userB) managed by the self node, other nodes to verify the trade of the time-designated withdrawal approval at or later than the time at which the system time (management time) of the self node is "date". Based on this verification result, the BC node 1b issues a withdrawal request transaction (S3).

This withdrawal request transaction includes "account" representing an account of a receiver who performs the withdrawal. The withdrawal request transaction serves as a transaction for searching a token that the account of "account" is allowed to withdraw at the current time point and executes token transfer.

Based on the withdrawal request, the nodes that verify the trade of the time-designated withdrawal approval (BC nodes 1a, 1c, and 1d) extract a list of the time-designated withdrawal approvals (time-designated withdrawal approvals corresponding to "account" included in the withdrawal request) from the BC ledger. Next, based on the extracted time-designated withdrawal approval, the BC nodes 1a, 1c, and 1d perform the following determination and return the determination to the BC node 1b as a verification result (S4). -- In a case where no withdrawal approval is present for a designated time at or later than the system time of the node, the withdrawal request transaction is discarded (the trade is not approved). -- In a case where the withdrawal approval is present for a designated time at or later than the system time of the node, the token is transferred (trade is approved) based on the withdrawal approval information.

As described above, with the trade system according to the embodiment, whether to approve the trade is determined based on the verification result of each node in the process of verifying the transaction of the blockchain. Thus, it is ensured that the trade is not executed at a time other than the designated time and the token may be transferred at or later than the designated time. Accordingly, with the trade system according to the embodiment, one of tasks is that, in a time-designated trade in the blockchain, the trade is discarded in a case where a transaction is issued at a time other than the designated time and execution and a result of the trade at the designated time-designated time are ensured" is solved, and a safe trade for which a time is designated is realized.

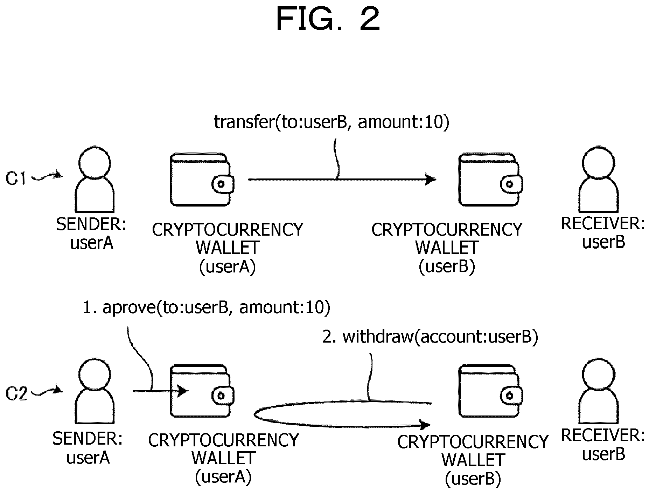

Roughly classified, two token transfer methods exist. FIG. 2 is an explanatory diagram illustrating examples of the token transfer methods.

As illustrated in FIG. 2, case C1 indicates a method in which the sender (userA) executes a remittance transaction, and case C2 indicates a method in which the receiver (userB) executes a remittance transaction.

In case C1, the remittance is executed immediately at a timing of execution of the transaction by the sender. This method is usually used because the remittance is executed on the spot in normal remittance such as payment in a store. Meanwhile, case C2 is a method in which the token amount allowed to be withdrawn is first designated by the sender side, and then, the receiver side transfers the token by the amount approved to be withdrawn. By setting the token in a reserved state in the form of withdrawal approval, this method may be used for conditional remittance in which, for example, the receiver may withdraw when a particular condition is satisfied. The trade system according to the embodiment is different from the related art in that, the trade system according to the embodiment is realized based on the method of case C2.

### (Embodiment)

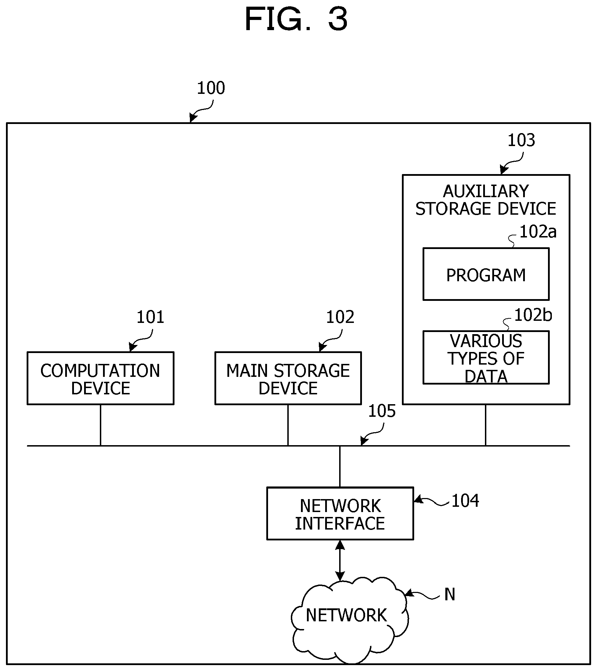

FIG. 3 is a block diagram illustrating an example of a hardware configuration of an information processing apparatus according to the embodiment. As illustrated in FIG. 3, the hardware configuration of an information processing apparatus 100 is equivalent to that of a usual computer such as a personal computer (PC) and corresponds to each node, each host terminal, and the like in the trade system.

For example, the information processing apparatus 100 includes a computation device 101 such as a central processing unit (CPU), a main storage device 102 such as a random-access memory (RAM), an auxiliary storage device 103 such as a hard disk drive (HDD) or a solid-state drive (SSD), and a network interface 104. The computation device 101, the main storage device 102, the auxiliary storage device 103, and the network interface 104 are coupled to each other via a data bus 105.

The auxiliary storage device 103 stores various types of data 102b such as various types of setting, the BC ledger, and so forth referred to by the computation device 101 at the time of execution. Various functions of the information processing apparatus 100 are described as a program 102a. The computation device 101 loads the program 102a onto the main storage device 102 and sequentially executes the program 102a to provide the various functions. A plurality of computers may cooperate with each other through cloud computing to provide the various functions of the information processing apparatus 100. The information processing apparatus 100 may transmit and receive messages to and from a user (or an application operated by a user) or a communication device via the network interface 104 coupled to a network N.

The program 102a is not necessarily stored in the auxiliary storage device 103. For example, the information processing apparatus 100 may read and execute the program 102a stored in a readable storage medium. The storage medium readable by the information processing apparatus 100 corresponds to, for example, a portable recording medium such as a compact disc read-only memory (CD-ROM), a Digital Versatile Disc (DVD), a Universal Serial Bus (USB) memory, a semiconductor memory such as flash memory, a hard disk drive, or the like. The program 102a may be stored in an external apparatus coupled to the network N, and the information processing apparatus 100 may read the program 102a from the external apparatus through the network interface 104 and execute the program 102a.

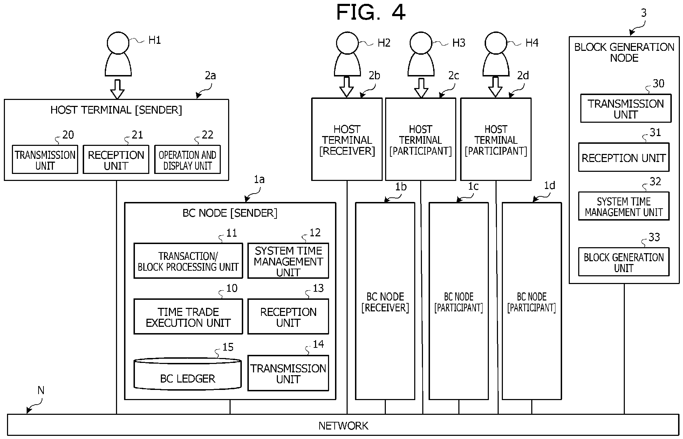

FIG. 4 is an explanatory diagram illustrating an example of an entire configuration of the trade system according to the embodiment. As illustrated in FIG. 4, the trade system according to the embodiment includes host terminals 2a to 2d and a block generation node 3 in addition to the above-described BC nodes 1a to 1d. In this trade system, the BC nodes 1a to 1d, the host terminals 2a to 2d, and the block generation node 3 are communicably coupled to each other via the network N such as a local area network (LAN) or the Internet.

In the following description, in a case where the host terminals 2a to 2d are not particularly distinguished from each other, they are simply referred to as host terminals 2. Indications in [ ] described in the host terminals 2a to 2d in the drawing are the owners (account) of the host terminals 2a to 2d. For example, the host terminal 2a is a terminal owned by a sender H1. The host terminal 2b is a terminal owned by a receiver H2. The host terminals 2c and 2d are terminals owned by a participant H3 being an account other than the sender H1 and the receiver H2.

Likewise, indications in [ ] described in the BC nodes 1a to 1d in the drawing are the accounts managed by the BC nodes. For example, the BC node 1a is a node that manages the sender H1. The BC node 1b is a node that manages the receiver H2. The BC nodes 1c and 1d are nodes that manages the participant H3.

The host terminals 2 each include a transmission unit 20, a reception unit 21, and an operation and display unit 22. The transmission unit 20 is a processing unit that transmits various types of data to the BC nodes 1 via the network N. For example, the transmission unit 20 notifies the BC nodes 1 of an instruction such as a request for transfer of a financial asset by the sender H1.

The reception unit 21 is a processing unit that receives various types of data transmitted from the BC nodes 1 via the network N. For example, the reception unit 21 receives, from the BC nodes 1, responses to, for example, the request for transfer of the financial asset by the sender H1.

The operation and display unit 22 is a processing unit that accepts operational input by the user (the sender H1, the receiver H2, and the participant H3) and performs display output to the user. For example, the operation and display unit 22 accepts transfer content of the financial asset by the sender H1. The operation and display unit 22 displays and outputs the responses from the BC nodes 1 to the transfer request based on the transfer content accepted from the sender H1.

The BC nodes 1 each include the time trade execution unit 10, a transaction/block processing unit 11, a system time management unit 12, a reception unit 13, a transmission unit 14, and a BC ledger 15.

The time trade execution unit 10 is a processing unit that executes a trade related to the above-described time-designated withdrawal approval. The transaction/block processing unit 11 is a processing unit that performs processing such as issuing of a transaction and verification of a block in a blockchain (BC). The details of the processes related to the time trade execution unit 10 and the transaction/block processing unit 11 will be described later.

The system time management unit 12 is a processing unit that manages the system time of the BC node 1. For example, the system time management unit 12 has a timing function such as a real time clock (RTC) and times the system time synchronized with a network time protocol (NTP) server or the like. According to a request from the time trade execution unit 10 or the like, the system time management unit 12 notifies of the timed system time.

The reception unit 13 is a processing unit that receives, in response to a request from the time trade execution unit 10, the transaction/block processing unit 11, and the like, various types of data in the other nodes (the BC nodes and the block generation node 3) and the like via the network N. The transmission unit 14 is a processing unit that transmits data that the host terminals 2, the other nodes (the BC nodes and the block generation node 3), and the like notify via the network N.

The BC ledger 15 is data related to the blockchain and is a distributed ledger related to financial assets shared and managed by the BC nodes 1.

The block generation node 3 is a node responsible for a process of forming issued transactions into a block and transmitting the block to the nodes. The block generation node 3 includes a transmission unit 30, a reception unit 31, a system time management unit 32, and a block generation unit 33.

The transmission unit 30 is a processing unit that transmits various types of data to the BC nodes 1 via the network N. The reception unit 31 is a processing unit that receives data that the BC nodes 1 notify via the network N. Similarly to the system time management unit 12 of the BC nodes 1, the system time management unit 32 is a processing unit that manages the system time of the block generation node 3.

The block generation unit 33 is a processing unit that generates blocks of the blockchain. For example, the block generation unit 33 generates blocks of the blockchain based on known techniques such as a mining node in Bitcoin and Ordering Service of Hyperledger (registered trademark) Fabric (The Ordering Service, Hyperledger Fabric, "https://hyperledger-fabric.readthedocs.io/en/release-2.0/orderer/ordering_service.html"), which is an open-source software (OSS) of a consortium type blockchain.

Next the details of the following procedure in a case where a remittance trade is executed at a designated time are described. 0: Initial state, 1: Withdrawal approval registration, 2: Withdrawal wait/withdrawal execution

### (0: Initial state)

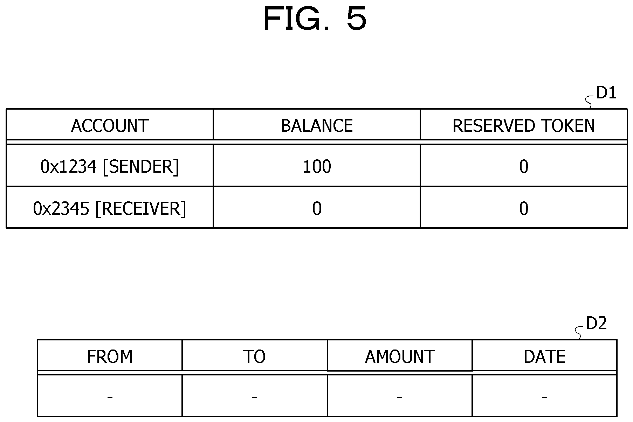

FIG. 5 is an explanatory diagram illustrating an example of data registered in the BC ledger 15, indicating, for example, an initial state of the data registered in the BC ledger 15. As illustrated in FIG. 5, the data registered in the BC ledger 15 includes token balance data D1 and withdrawal approval data D2.

In the token balance data D1, "account" indicates an account address of the user, "balance" indicates a balance of tokens, and "reserved token" indicates the token amount reserved for remittance by the withdrawal approval.

Although description is made with an account-type token management technique that manages the balances of the tokens on an account-by-account basis for ease of understanding according to the present embodiment, a similar performance is possible also with an unspent transaction output (UTXO)-type technique. In the illustrated example (initial state), it is registered for the account of 0x1234 [sender] in the token balance data D1 that the balance of the token is 100 and the token amount for which the remittance is reserved by the withdrawal approval is 0. For the account of 0x2345 [receiver], it is registered that the balance of the token is 0 and the token amount for which the remittance is reserved by withdrawal approval is 0.

The withdrawal approval data D2 is data related to the time-designated withdrawal approval (approve()) having been described with reference to FIG. 1. In the illustrated example, the withdrawal approval data D2 is empty, and the initial state is a state in which the trade has not been registered yet.

### (1: Withdrawal approval registration)

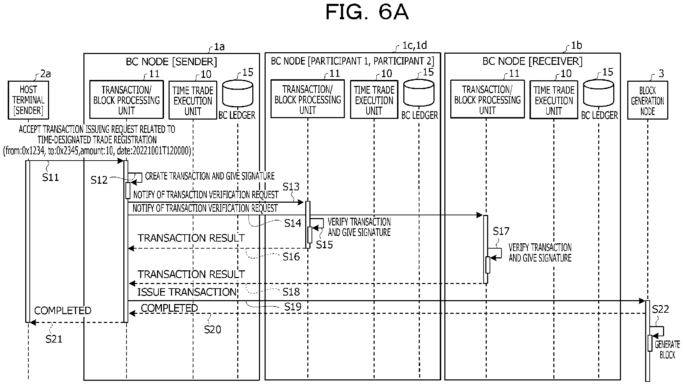

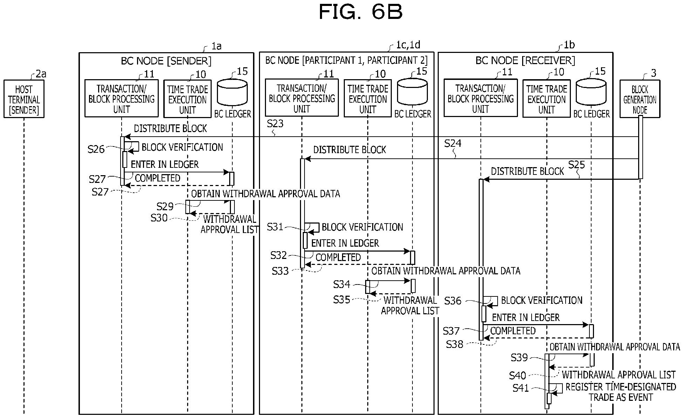

FIGs. 6A and 6B are a flowchart illustrating an example of processing for the withdrawal registration (FIG. 6B illustrates a continuation of the processing in FIG. 6A).

As illustrated in FIG. 6A, the BC node 1a [sender] accepts a transaction issuing request related to a time-designated trade registration from the host terminal 2a [sender] (S11). For example, the BC node 1a accepts a transaction issuing request in which the addresses of the [sender] and the [receiver] (from and to), the token amount to be remitted (amount), and the time (date) at which the withdrawal is allowed are designated. Although any method may be used to designate a time according to the embodiment, a format that may be used for comparison in an electronic calculator is desirable. For example, a value obtained by converting universal coordinated time into milliseconds may be used. Herein, time information is expressed in an ISO 8601 format. Based on this requested content, the BC node 1a issues a transaction including a time at which the withdrawal is allowed (S12 to S21).

For example, the transaction/block processing unit 11 creates a transaction and gives a signature on it based on the requested content (S12) and notifies the other nodes (BC nodes 1b to 1d) of a verification request for the created transaction (S13 and S14).

After receiving the verification request for the transaction, the transaction/block processing units 11 of the BC nodes 1c and 1d verify the transaction data. Then, these transaction/block processing units 11 give a signature on it (S15) and return the verification result for the transaction to the BC node 1a (S16). Likewise, after receiving the verification request for the transaction, the transaction/block processing unit 11 of the BC node 1b verifies the transaction data. Then, the transaction/block processing unit 11 gives a signature on it (S17) and returns the verification result for the transaction to the BC node 1a (S18).

As described above, in the trade system according to the embodiment, the execution result of the issued transaction data is verified by the different nodes (1b to 1d) from the node (1a) that has issued the transaction.

Although there are various types of methods for verifying transaction data for individual blockchains, according to the present embodiment, description is given with a method in which each node verifies transaction data before being formed into blocks based on Transaction Flow (Transaction Flow, Hyperledger Fabric, "https://hyperledger-fabric.readthedocs.io/ja/latest/txflow.html") in Hyperledger Fabric. Also in the case of another blockchain such as Ethereum, verification may be similarly performed with respect to the points that the transaction is verified by the other nodes than the issuing node and the point that the result may be verified even after the execution.

Next, the transaction/block processing unit 11 of the BC node 1a issues a transaction for which the execution result is verified and notifies the block generation node 3 of the issued transaction (S19). The block generation node 3 returns a completion notification related to the notified transaction to the BC node 1a (S20). The transaction/block processing unit 11 of the BC node 1a notifies the host terminal 2a of the completion notification from the block generation node 3 (S21).

The block generation node 3 generates a block of the BC by mining or the like (S22), and the notified transactions are summarized as block data.

Next, as illustrated in FIG. 6B, the block generation node 3 distributes a block including the notified transaction to the BC nodes 1a to 1d (S23 to S25), and the block is shared by all the participants (all the BC nodes 1a to 1d) in the blockchain.

For example, the transaction/block processing unit 11 of the BC node 1a verifies the block distributed from the block generation node 3, enters the block in the BC ledger 15 (S26 and S27), and obtains a BC ledger 15 entry completion (S28).

When the trade is registered as described above, the information on an item for which the withdrawal is approved is updated. Accordingly, the time trade execution unit 10 of the BC node 1a refers to the BC ledger 15 to obtain the withdrawal approval data D2 (S29) and updates the withdrawal approval list (S30).

Likewise, the transaction/block processing units 11 of the BC nodes 1c and 1d verify the block distributed from the block generation node 3, enter the block in the BC ledger 15 (S31 and S32), and obtain the BC ledger 15 entry completion (S33).

When the trade is registered as described above, the information on an item for which the withdrawal is approved is updated. Accordingly, the time trade execution units 10 of the BC nodes 1c and 1d refer to the BC ledger 15 to obtain the withdrawal approval data D2 (S34) and update the withdrawal approval list (S35).

Likewise, the transaction/block processing unit 11 of the BC node 1b verifies the block distributed from the block generation node 3, enters the block in the BC ledger 15 (S36 and S37), and obtains the BC ledger 15 entry completion (S38).

When the trade is registered as described above, the information on an item for which the withdrawal is approved is updated. Accordingly, the time trade execution unit 10 of the BC node 1b refers to the BC ledger 15 to obtain the withdrawal approval data D2 (S39) and updates the withdrawal approval list (S40). Since the time-designated withdrawal approval of the [receiver] which is the account managed by the self node is newly included in the withdrawal approval list, the time trade execution unit 10 registers this time-designated withdrawal approval as an event (S41).

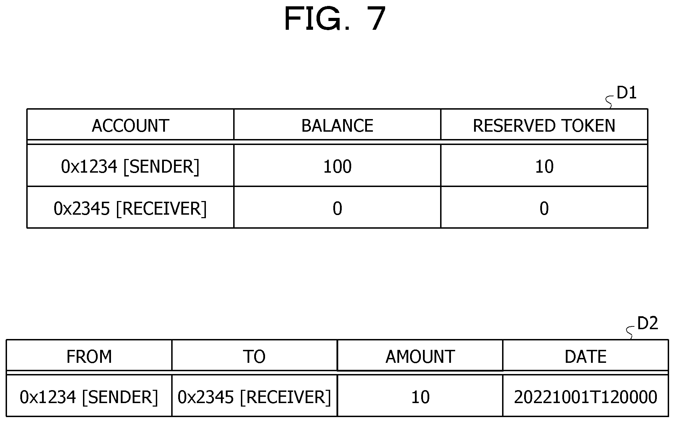

FIG. 7 is an explanatory diagram illustrating an example of the data registered in the BC ledger 15, exemplifying, for example, a state of the BC ledger 15 after the update due to the distribution of the block. For example, as is clearly understood from a comparison between FIGs. 5 and 7, the value of reserved token has been changed in FIG. 7. As illustrated in FIG. 7, the time trade execution unit 10 of each node monitors the update of the withdrawal approval data D2. In a case where there is an update (addition of the time-designated withdrawal approval) in the information on the account related to the self node, the time trade execution unit 10 of the node registers the updated time-designated withdrawal approval as an event (S41) and transitions to a withdrawal wait state.

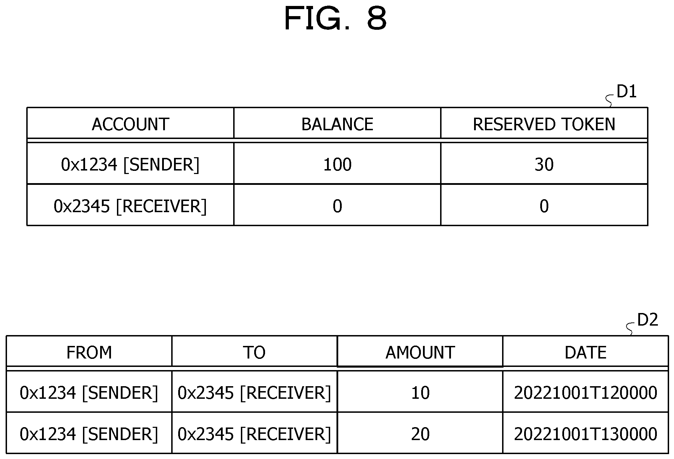

FIG. 8 is an explanatory diagram illustrating an example of the data registered in the BC ledger 15, exemplifying, for example, a state in which another trade of a different withdrawal time is registered in the withdrawal approval data D2 in FIG. 7. In the example illustrated in FIG. 8, a second trade is registered after the trade in which the parameters of the withdrawal approval data D2 are set to " (from: 0x1234, to: 0x2345, amount: 10, date: 20221001T120000)". For example, a trade with the amount of 20 and the date of 20221001T130000 as differences from the first registration is further registered in addition to the first registration. For each trade registered in this manner, the time trade execution unit 10 determines whether the trade is a trade in which the account related to the self node is "to" and registers an event in a case where the account is "to" in the trade.

### (2: Withdrawal wait/withdrawal execution)

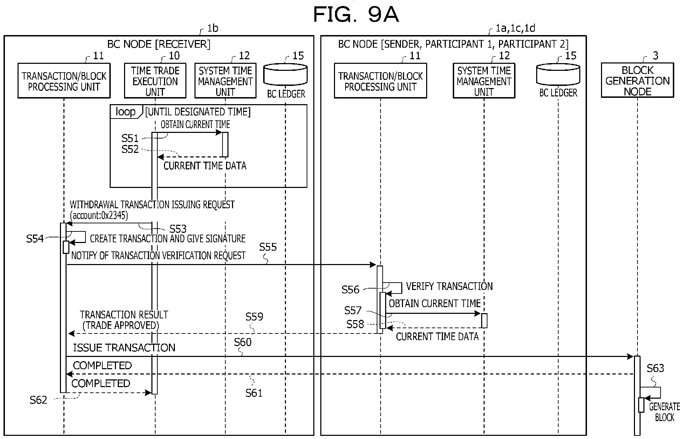

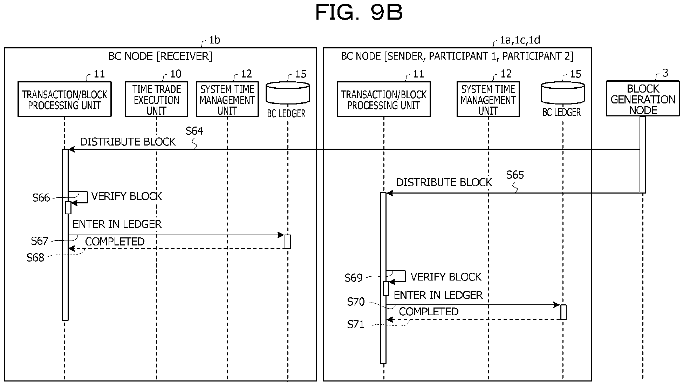

FIGs. 9A and 9B are a flowchart illustrating an example of processing for the withdrawal wait/withdrawal execution (FIG. 9B illustrates a continuation of the processing in FIG. 9A).

As illustrated in FIG. 9A, the time trade execution unit 10 of the BC node 1b set in a wait state after S41 waits for processing until the designated time of the time-designated withdrawal approval registered as an event is reached based on the current time data (system time) obtained from the system time management unit 12 of the self node (S51 and S52).

Next, after the system time has reached a designated time, the time trade execution unit 10 of the BC node 1b notifies the transaction/block processing unit 11 of a request to issue a transaction that executes the withdrawal (S53). Here, it is assumed that the current time is 12:00 on October 1, 2022. Thus, the time trade execution unit 10 notifies the transaction/block processing unit 11 of a request to issue a withdrawal request transaction for which the date is "20221001T120000".

Next, the transaction/block processing unit 11 of the BC node 1b creates the transaction and gives the signature on it for the transaction for which the issuing request is accepted (S54) and notifies the other nodes (BC nodes 1a, 1c, and 1d) of the verification request for the created transaction (S13 and S55).

After receiving the verification request for the transaction, the transaction/block processing units 11 of the BC nodes 1a, 1c, and 1d verify the transaction data (S56). Then, these transaction/block processing units 11 obtain the current time data (system time) from the system time management unit 12 (S57 and S58). Next, the transaction/block processing units 11 of the BC nodes 1a, 1c, and 1d notify the BC node 1b of a result of checking whether the system time is later than the designated time of the transaction (the trade is approved/the trade is not approved, S59).

The transaction/block processing unit 11 of the BC node 1b having received the notification that the trade is approved issues the transaction for which the issuing request has been received and notifies the block generation node 3 of the issued transaction (S60). The block generation node 3 returns the completion notification related to the notified transaction to the BC node 1b (S61). The transaction/block processing unit 11 of the BC node 1b notifies the time trade execution unit 10 of the completion notification from the block generation node 3 (S62). The transaction/block processing unit 11 of the BC node 1b having received the notification that the trade is not approved discards the transaction for which the issuing request is received.

The block generation node 3 generates a block of the BC by mining or the like (S63), and the notified transactions are summarized as block data.

Next, as illustrated in FIG. 9B, the block generation node 3 distributes a block including the notified transaction to the BC nodes 1a to 1d (S64 and S65). Thus, the block including the notified transaction is shared by all the participants (all the BC nodes 1a to 1d) in the blockchain.

The transaction/block processing unit 11 of the BC node 1b verifies the block distributed from the block generation node 3, enters the block in the BC ledger 15 (S66 and S67), and obtains the BC ledger 15 entry completion (S68). Likewise, the transaction/block processing units 11 of the BC nodes 1a, 1c, and 1d verify the block distributed from the block generation node 3, enter the block in the BC ledger 15 (S69 and S70), and obtain the BC ledger 15 entry completion (S71).

As described above, the transaction having received an issuing request checks whether there is a trade for which a withdrawal is allowed based on the system time of the other nodes that verify the transaction. When there is a withdrawal approval, the transaction/block processing unit 11 of the BC node 1b transfers the token amount approved in the trade from the account of the sender to the account of the receiver. When there is not a withdrawal approval, the transaction/block processing unit 11 of the BC node 1b determines that the trade is unable to be executed and discards the transaction of the withdrawal.

According to the present embodiment, it is assumed that the trade of the transaction is executed in a case where greater than or equal to the majority of the nodes approve the trade, and the trade fails and the token is not transferred in a case where smaller than the majority of the nodes approve the trade (the number of the nodes that determine to approve the trade desired to execute the trade may be determined by a policy of the blockchain).

In the illustrated example, since the system time is 12:00 on October 1, 2022 or later in all of the three nodes, the item with the date "20221001T120000"" corresponds as the trade for which withdrawal is allowed. Thus, the result indicating that the trade is approved that authorizes the execution of the trade is returned to the BC node 1b. Accordingly, the transaction/block processing unit 11 of the BC node 1b transfers 10 tokens set in the amount from the sender to the receiver. Although only one corresponding trade exists in the present embodiment, in a case where a plurality of corresponding trades exist, the token transfer for them may be collectively executed.

When the withdrawal trade is executed by the above-described transaction, the trade of the withdrawal approval data for which the transfer has been executed is deleted, and the value of the reserved token is reduced. Accordingly, the state of the BC ledger 15 after the execution of the trade is updated.

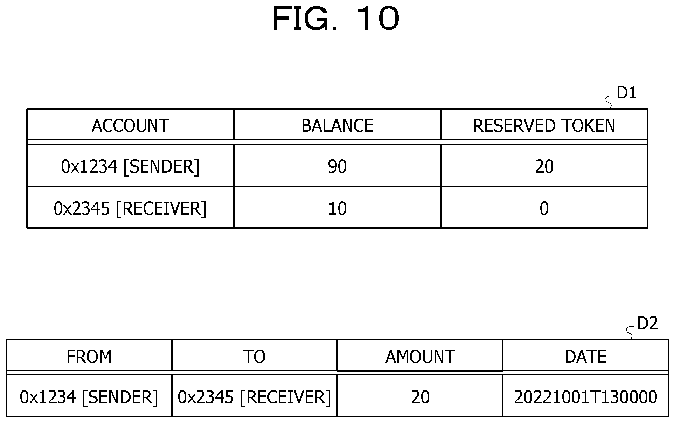

FIG. 10 is an explanatory diagram illustrating an example of the data registered in the BC ledger 15, illustrating, for example, the updated content of the BC ledger 15 exemplified by FIG. 8. As illustrated in FIG. 10, in the updated BC ledger 15, the first trade of the withdrawal approval data D2 exemplified in FIG. 8 is executed at or later than 12:00 on October 1, 2022. For example, the amount of 10 is transferred from the 0x1234 [sender] to 0x2345 [receiver]. For example, in the token balance data D1, the balance of 0x1234 [sender] is 90, and the balance of 0x2345 [receiver] is 10.

At the time point of 12:00 on October 1, 2022, a trade (transfer of the token of 20 with "20221001T130000" as the date) the designated time of which has not reached has not been executed. As described above, according to the present embodiment, since each node may verify the trade based on the time-designated withdrawal approval, and only a trade the designated time of which has reached may be executed, one of the above-described tasks is solved.

### (Case of failure in withdrawal request)

It is assumed that the system times of the different nodes are not synchronized with each other in the blockchain (BC). Thus, even when the system time of the node that has issued the transaction has reached the designated time, there is an error from the actual time, and the trade is not necessarily executed. Accordingly, a process to ensure the trade when such a withdrawal request failure occurs is described.

### (0: Initial state)

Similarly to the above-described case, the initial state is the state illustrated in FIG. 5. For example, the token balance data D1 of the accounts in the initial state are in a state in which the 0x1234 (sender) has 100 tokens and the 0x2345 (receiver) has 0 tokens. The withdrawal approval data D2 is empty, and the initial state is a state in which the trade has not been registered yet.

### (1: Withdrawal approval registration)

The withdrawal approval registration is performed similarly to the above-described case (the flowchart is similar to that illustrated in FIGs. 6A and 6B). The state of the updated withdrawal approval data D2 is a state in which a single withdrawal approval is registered as illustrated in FIG. 7.

### (2: Withdrawal wait/withdrawal execution)

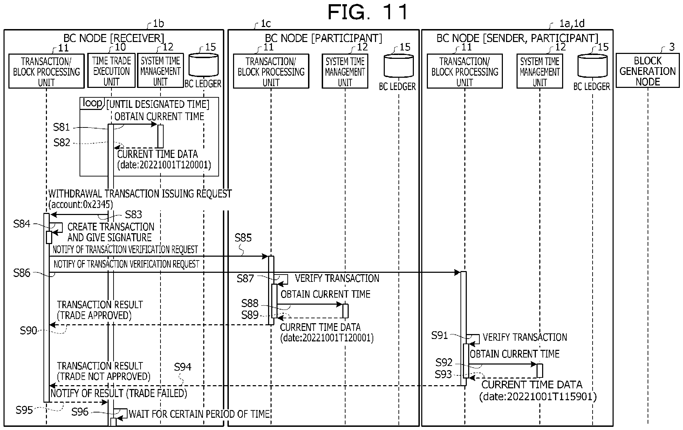

First, a case where the withdrawal request for the first time fails is described. FIG. 11 is a flowchart illustrating an example of the case where the withdrawal request fails.

As illustrated in FIG. 11, similar processing to that in the above-described case is performed (S81 to S84), and the fact that the designated time has been reached triggers transmission of a transaction verification request to each node by the transaction/block processing unit 11 of the BC node 1b (S85 and S86).

However, in the present case, an error occurs in the system time of the receiver node, and the withdrawal is requested earlier than the actual time. For example, it is assumed that the current time is 11:59 on October 1, 2022, but the system time of the receiver node is 12:00 on October 1, 2022. The error in the system time may be caused by an external factor by a malicious user, may occur accidentally due to an internal factor, or may be caused intentionally.

Similarly to the above-described case, the BC nodes 1c, 1a, and 1d for which the transaction verification is requested determine whether to approve the withdrawal based on the respective system times and return the transaction result to the BC node 1b (S87 to S94).

As in the case of the receiver node, there may a case where a node with an earlier time returns that the trade is approved. However, most of the nodes operate at more accurate time, and accordingly, the result that the trade is not approved is returned. In the illustrated example, the BC node 1c returns that the trade is approved, and the BC nodes 1a and 1d return that the trade is not approved.

According to the policy of the present embodiment, the trade is unable to be executed in a case where a result indicating that a trade is approved is not obtained from a majority of the nodes. Accordingly, the transaction/block processing unit 11 of the BC node 1b returns, to the time trade execution unit 10, a result indicating that the trade of this transaction fails (S95). Upon reception of the result of the trade failure, the time trade execution unit 10 of the BC nodes 1 transitions to the wait state again (S96).

Depending on the form of the blockchain, unlike the present embodiment, the result of the transaction verification is unable to be explicitly received in some cases. Even in this case, similar processing may be performed when the time trade execution unit 10 monitors the BC ledger 15 and checks whether the issued transaction is successful. In this case, when the token is not transferred even after a certain period of time has elapsed, the trade is determined to be a failure and the time trade execution unit 10 transitions to the wait state again.

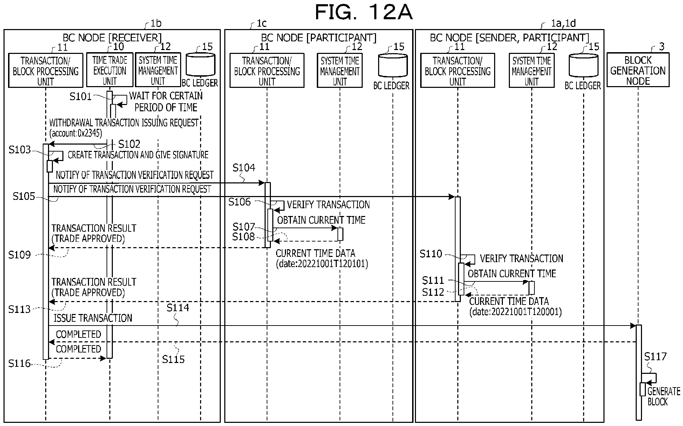

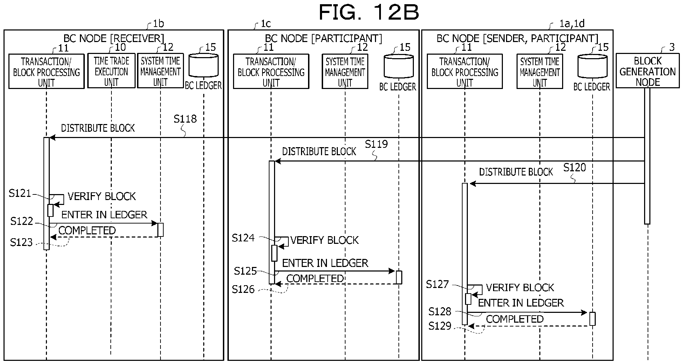

Next, the case of retransmitting the withdrawal request having failed for the first time is described. FIGs. 12A and 12B are a flowchart illustrating an example of processing for retransmission of the withdrawal request (FIG. 12B illustrates a continuation of the processing in FIG. 12A).

After waiting for a certain period of time, for example, a wait time of one minute or the like (S101), the time trade execution unit 10 of the BC node 1b that has transitioned to the wait state in S96 of FIG. 11 performs similar processing to that in S53 to S71.

For example, the transaction/block processing unit 11 of the BC node 1b transmits the transaction verification request to each node in order to issue a transaction for withdrawal again (S104 and S105). Similarly to the first time, the transaction/block processing units 11 of the BC nodes 1c, 1a, and 1d for which the transaction verification is requested determine whether to approve the withdrawal based on the respective system times. Due to the wait for the certain period of time, the nodes the times of which did not reach the designated time before returns the approval to the trade because the system time has reached the designated time.

As a result, the result of approval to the trade is obtained from the majority of the nodes. Accordingly, the transaction/block processing unit 11 of the BC node 1b transmits transaction issuance to the block generation node 3 (S114), the transaction issuance is shared by all the participants in the blockchain, and the withdrawal trade is executed.

When the withdrawal trade is executed, the trade of the withdrawal approval data for which the transfer has been executed is deleted, and the value of the reserved token is reduced.

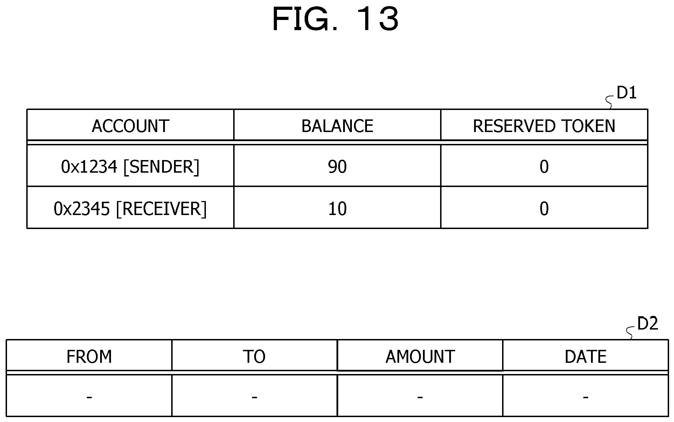

FIG. 13 is an explanatory diagram illustrating an example of the data registered in the BC ledger 15. As illustrated in FIG. 13, the trade having been dropped for the first time since the designated time has not been reached is recognized as the trade the designated time of which has been reached by each node in the blockchain by a second retransmission, and the transfer of 10 tokens is executed.

As described above, in the trade system according to the embodiment, even in a case where the system time differs between the nodes, a trade result at a designated time may be ensured by verifying the time between the nodes in the blockchain and controlling retransmission of the failed trade.

### (Case of making node requesting withdrawal redundant)

In the following, a case where a certain problem occurs in the receiver node and a transaction is unable to be issued at a designated time is described.

In each of the above-described cases, whether the withdrawal request transaction is executed at the designated time is verified with the receiver node as the starting point. However, when an error occurs in the node serving as the starting point, the subsequent processing is not necessarily executed, and the execution of the time-designated trade is not necessarily ensured. Accordingly, in the present case, by making the node that issues the transaction redundant so as to ensure the trade at the designated time even in a case where the receiver node is unable to issue the withdrawal request transaction.

### (0: Initial state)

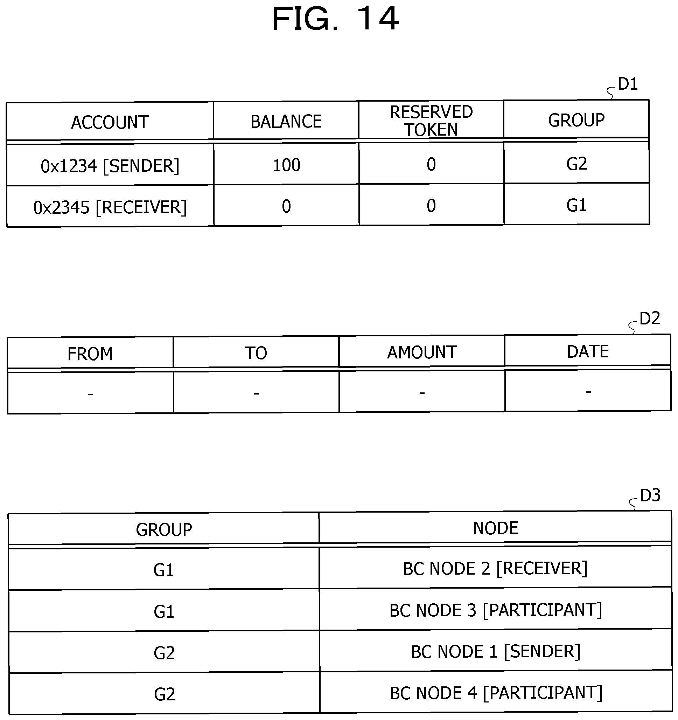

FIG. 14 is an explanatory diagram illustrating an example of the data registered in the BC ledger 15, indicating, for example, the initial state of the data registered in the BC ledger 15 in the present case.

As illustrated in FIG. 14, in the token balance data D1, the token balance of each account is as follows: 100 tokens for 0x1234 (sender), 0 tokens for 0x2345 (receiver 1), and 0 tokens for 0x3456 (receiver 2). The withdrawal approval data is empty. No trade is registered in the withdrawal approval data D2 in the initial state.

In the present case, group data D3 is newly added to the BC ledger 15. The group data D3 is data that defines groups for making the nodes redundant, and a group is designated on a node-by-node basis. Each account is assigned with group information. Each node monitors the time-designated trade belonging to the same group similarly to the trade of its own account and issues an alternative transaction when it is desired.

For example, it is defined in the group data D3 that the BC node 1b as the [receiver] and the BC node 1c as the [participant] belong to the same group "G1". It is also defined in the group data D3 that the BC node 1a as the [sender] and the BC node 1d as the [participant] belong to the same group "G2".

### (1: Withdrawal approval registration)

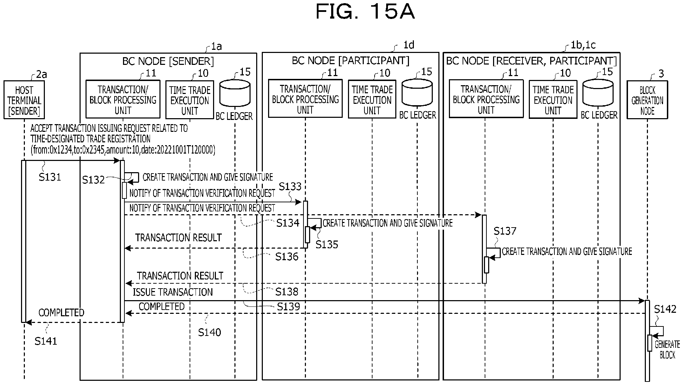

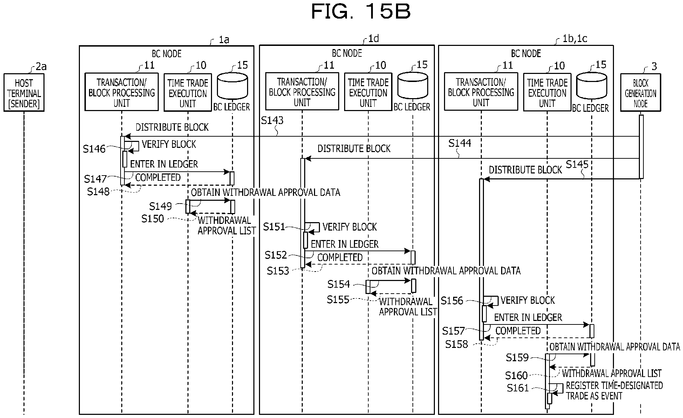

FIGs. 15A and 15B are a flowchart illustrating an example of processing for the withdrawal registration (FIG. 15B illustrates a continuation of the processing in FIG. 15A). As illustrated in FIG. 15A and FIG. 15B, for the withdrawal registration, the same processing (S131 to S158) as that of S11 to S38 of FIGs. 6A and 6B described above is performed.

For example, transactions for which the execution results have been verified are summarized as the block data by the block generation node 3, and the block data is shared by all the participants in the blockchain. When a trade is registered in the BC ledger 15, information on an item for which the withdrawal is approved is updated.

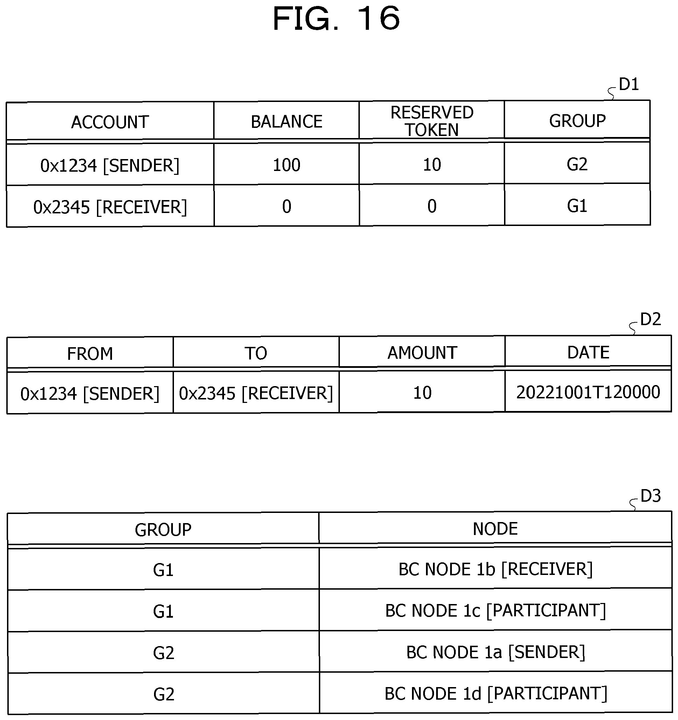

FIG. 16 is an explanatory diagram illustrating an example of the data registered in the BC ledger 15, exemplifying, for example, a state of the BC ledger 15 after the update due to the distribution of the block (S143 to S145). As illustrated in FIG. 16, a trade in which the parameters of the withdrawal approval data D2 are set to " (from: 0x1234, to: 0x2345, amount: 10, date: 20221001T120000)" is registered in the updated BC ledger 15. The account belonging to "G1" being the same group as that of the [receiver] of this trade is the [participant] belonging to the BC node 1c.

The time trade execution unit 10 of each node monitors the update of the withdrawal approval data D2, and in a case where the information on the account related to the self node is updated, transitions to the withdrawal wait state. Although the trades are checked while the accounts are limited only to the account managed by the self node up to the previous case, in the present case, the accounts belonging to the same group are also checked. For example, since the account 0x2345 belongs to group G1, the time trade execution units 10 of both the BC nodes 1b and 1c transition to the wait state.

### (2: Withdrawal wait/withdrawal execution)

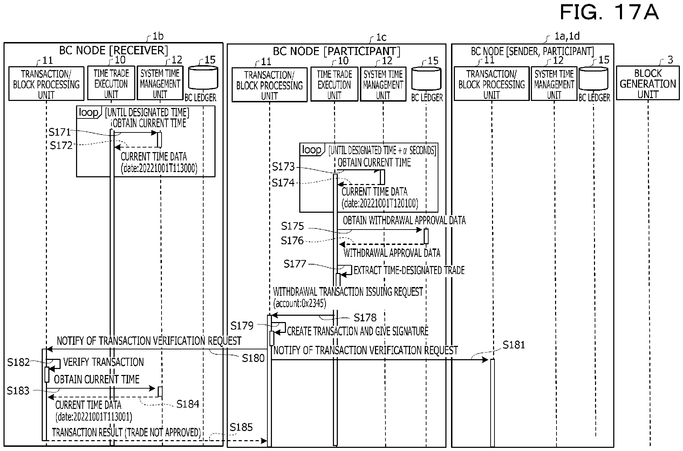

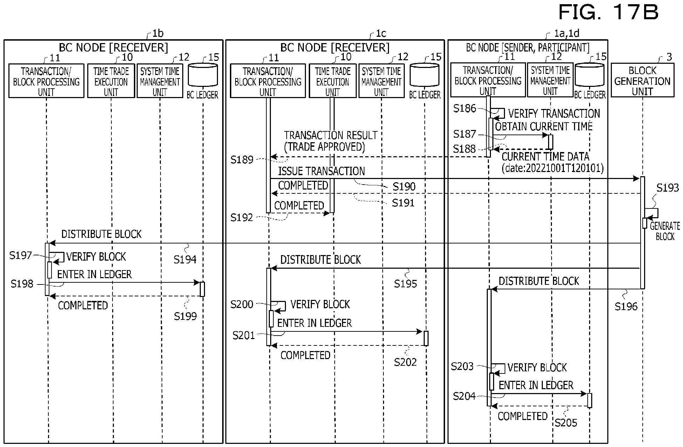

FIGs. 17A and 17B are a flowchart illustrating an example of processing for the withdrawal wait/withdrawal execution (FIG. 17B illustrates a continuation of the processing in FIG. 17A).

As illustrated in FIG. 17A, in the present case, the time trade execution unit 10 of the BC node 1b as the receiver is in the wait state (S171 and S172), and the BC node 1c belonging to group G1 is also in the wait state (S173 and S174) similarly to the BC node 1b.

Next, the fact that the designated time has been reached triggers issuance of a transaction that executes the withdrawal by the transaction/block processing unit 11 of the BC node 1c similarly to that of the BC node 1b (S175 to S190).

It is assumed that it has reached 12:00 on October 1, 2022, and a transaction of the withdrawal approval with the date of "20221001T120000" is issued. Normally, the BC node 1b owned by the account of the receiver is to issue the transaction. However, here, it is assumed that nothing is done because the system time of the BC node 1b is significantly deviated due to a certain problem. In a case where the BC node 1b does not issue the transaction, the BC node 1c that belongs to the same group and is in the wait state starts operation (S175 and after) in order to make the withdrawal request.

For example, the time trade execution unit 10 of the BC node 1c waits until the designated time based on the system time of the self node (S173 and S174). When the designated time is reached, the transaction that executes the withdrawal is issued. Here, it is assumed that the BC node 1c, which is a redundant node, starts the operation after waiting for a certain period of time, for example, one minute or the like from the designated time so as not to conflict with the node that normally execute the operation.

Next, in order to confirm that the node that is normally to execute the operation (BC node 1b) has not issued the transaction, the time trade execution unit 10 of the BC node 1c obtains the data of the BC ledger 15 and checks the state of the time-designated trade (S175 to S177). When it is determined, through these processes, that the receiver node has not moved, the time trade execution unit 10 of the redundant node make the withdrawal request instead (S178).

The issued transaction checks whether there is a trade for which the withdrawal is allowed based on the system time of the nodes that verify the transaction (S180 to S189). In the present case, since two nodes out of the three nodes allow the withdrawal of the trade of the date of "20221001T120000" (since the time of the BC node 1b as the receiver is deviated), the two nodes return the result of the approval to the trade that authorizes the trade execution, and 10 tokens set in the amount are transferred from the sender to the receiver.

When the withdrawal trade is executed, the trade of the withdrawal approval data for which the transfer has been executed is deleted, and the value of the reserved token is reduced.

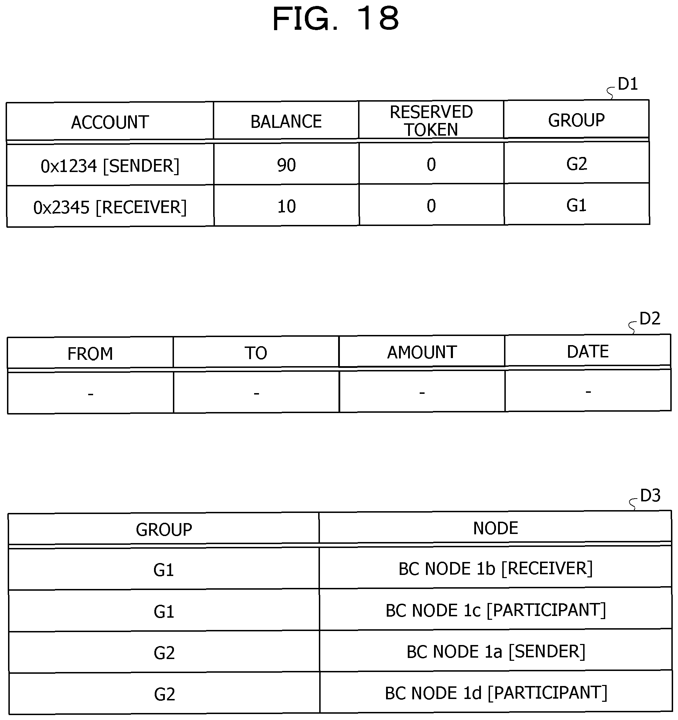

FIG. 18 is an explanatory diagram illustrating an example of the data registered in the BC ledger 15, exemplifying, for example, a state of the BC ledger 15 after the withdrawal trade. As illustrated in FIG. 18, since the withdrawal trade is performed by the redundant node (BC node 1c), it is possible to ensure that the trade is executed at the designated time by the redundant node even in the case where the receiver node that is to normally execute the trade does not correctly operate.

Setting information of the groups may be in a form other than management in the BC ledger 15. For example, the redundancy may be set for an organization to which the nodes belong by using, for example, Membership Service Providers of Hyperledger Fabric (Membership Service Providers, Hyperledger Fabric, "https://hyperledger-fabric.readthedocs.io/ja/latest/msp.html"). In a case where it is difficult to set groups in advance similarly to the present embodiment, similar processing may be realized by dynamically creating groups.

As described above, each of the nodes that manage the BC ledger 15 registers, in the BC ledger 15, authorization transactions. Each of the authorization transactions includes a transfer source account, a transfer destination account, a transfer amount of the financial asset, and a transfer time of the financial asset and authorizes transfer of the financial asset based on a request from the transfer source account of the financial asset. For an authorization transaction out of the registered authorization transactions for which a self node manages the transfer destination account, the node requests an other node to verify the authorization transaction after a management time managed by the self node has reached a transfer time included in the authorization transaction, and the node issues a request transaction that requests transfer of a financial asset related to the authorization transaction based on a result of the verification performed by the other node. The node returns, in a case where a request for verification of the authorization transaction is accepted from an other node, to the other node a result of the verification of whether the transfer time included in the authorization transaction is later than the management time.

Accordingly, in a trade system including the nodes that manage the BC ledger 15, a safe time-designated trade by a blockchain may be realized. As a result, a time-designated trade similar to that of bonds may be executed by using a token in the blockchain. This contributes to realization of a finance system in a decentralized finance (DeFi). With transfer management of the token by using a withdrawal approval, the token remains at a sender and is not transferred until the token is actually withdrawn and transferred. Thus, cancellation before a designated time may be performed only by returning a balance approved to be withdrawn to the original. This facilitates cancellation of the trade before the time compared to, for example, a method for transferring to another account once by using an escrow, and accordingly, improves usability.

The following appendices are further disclosed in relation to the embodiment including the embodiment example described above.

## Claims

1. A trade processing program, wherein
nodes manage a distributed ledger related to a financial asset, and the program that is for causing a computer of each of the nodes to execute a process, the process including
registering, in the distributed ledger, authorization transactions, the authorization transactions each including a transfer source account, a transfer destination account, a transfer amount of the financial asset, and a transfer time of the financial asset, and the authorization transactions each authorizing transfer of the financial asset based on a request from the transfer source account of the financial asset,
for an authorization transaction out of the registered authorization transactions for which a self node manages the transfer destination account, requesting a first other node to verify the authorization transaction after a management time managed by the self node has reached a transfer time included in the authorization transaction, and issuing a request transaction that requests transfer of a financial asset related to the authorization transaction based on a result of the verification performed by the first other node, and
returning, in a case where a request for verification of the authorization transaction is accepted from a second other node, to the second other node a result of the verification of whether the transfer time included in the authorization transaction is later than the management time.

2. The trade processing program according to claim 1, wherein
the issuing requests again the verification of the authorization transaction after a predetermined period of time has elapsed in a case where the issuing of the request transaction is denied base on the result of the verification performed by the first other node.

3. The trade processing program according to claim 1, wherein,
for an authorization transaction out of the registered authorization transactions for which a third other node manages the transfer destination account, in a case where a request transaction related to the authorization transaction has not been issued after a predetermined period of time has elapsed from a time at which the management time reaches a transfer time included in the authorization transaction, the issuing requests a fourth other node to verify the authorization transaction and issues, in place of the third other node, a request transaction related to the authorization transaction based on a result of the verification performed by the fourth other node.

4. The trade processing program according to claim 3, wherein,
for the authorization transaction out of the registered authorization transactions for which the third other node that belongs to an identical group to a group of the self node manages the transfer destination account, the issuing issues, in place of the third other node, the request transaction related to the authorization transaction.

5. The trade processing program according to claim 1, wherein
a plurality of the first other nodes are provided, and
the issuing requests to the plurality of first other nodes to perform the verification and issues the request transaction based on results of the verification performed by the plurality of first other nodes.

6. A trade processing method comprising:
registering, by a computer of each nodes which manage a distributed ledger related to a financial asset, in the distributed ledger, authorization transactions, the authorization transactions each including a transfer source account, a transfer destination account, a transfer amount of the financial asset, and a transfer time of the financial asset, and the authorization transactions each authorizing transfer of the financial asset based on a request from the transfer source account of the financial asset,
for an authorization transaction out of the registered authorization transactions for which a self node manages the transfer destination account, requesting a first other node to verify the authorization transaction after a management time managed by the self node has reached a transfer time included in the authorization transaction, and issuing a request transaction that requests transfer of a financial asset related to the authorization transaction based on a result of the verification performed by the first other node, and
returning, in a case where a request for verification of the authorization transaction is accepted from a second other node, to the second other node a result of the verification of whether the transfer time included in the authorization transaction is later than the management time.

7. The trade processing method according to claim 6, wherein
the issuing requests again the verification of the authorization transaction after a predetermined period of time has elapsed in a case where the issuing of the request transaction is denied base on the result of the verification performed by the first other node.

8. The trade processing method according to claim 6, wherein,
for an authorization transaction out of the registered authorization transactions for which a third other node manages the transfer destination account, in a case where a request transaction related to the authorization transaction has not been issued after a predetermined period of time has elapsed from a time at which the management time reaches a transfer time included in the authorization transaction, the issuing requests a fourth other node to verify the authorization transaction and issues, in place of the third other node, a request transaction related to the authorization transaction based on a result of the verification performed by the fourth other node.

9. The trade processing program according to claim 8, wherein,
for the authorization transaction out of the registered authorization transactions for which the third other node that belongs to an identical group to a group of the self node manages the transfer destination account, the issuing issues, in place of the third other node, the request transaction related to the authorization transaction.

10. The trade processing program according to claim 6, wherein
a plurality of the first other nodes are provided, and
the issuing requests to the plurality of first other nodes to perform the verification and issues the request transaction based on results of the verification performed by the plurality of first other nodes.

11. An information processing apparatus which manages a distributed ledger related to a financial asset comprising:
a computation device configured to execute a processing of:
registering, in the distributed ledger, authorization transactions, the authorization transactions each including a transfer source account, a transfer destination account, a transfer amount of the financial asset, and a transfer time of the financial asset, and the authorization transactions each authorizing transfer of the financial asset based on a request from the transfer source account of the financial asset,
for an authorization transaction out of the registered authorization transactions for which a self node manages the transfer destination account, requesting a first other node to verify the authorization transaction after a management time managed by the self node has reached a transfer time included in the authorization transaction, and issuing a request transaction that requests transfer of a financial asset related to the authorization transaction based on a result of the verification performed by the first other node, and
returning, in a case where a request for verification of the authorization transaction is accepted from a second other node, to the second other node a result of the verification of whether the transfer time included in the authorization transaction is later than the management time.

12. The information processing apparatus according to claim 11, wherein
the issuing requests again the verification of the authorization transaction after a predetermined period of time has elapsed in a case where the issuing of the request transaction is denied base on the result of the verification performed by the first other node.

13. The information processing apparatus according to claim 11, wherein,
for an authorization transaction out of the registered authorization transactions for which a third other node manages the transfer destination account, in a case where a request transaction related to the authorization transaction has not been issued after a predetermined period of time has elapsed from a time at which the management time reaches a transfer time included in the authorization transaction, the issuing requests a fourth other node to verify the authorization transaction and issues, in place of the third other node, a request transaction related to the authorization transaction based on a result of the verification performed by the fourth other node.

14. The information processing apparatus according to claim 13, wherein,
for the authorization transaction out of the registered authorization transactions for which the third other node that belongs to an identical group to a group of the self node manages the transfer destination account, the issuing issues, in place of the third other node, the request transaction related to the authorization transaction.

15. The information processing apparatus according to claim 11, wherein
a plurality of the first other nodes are provided, and
the issuing requests to the plurality of first other nodes to perform the verification and issues the request transaction based on results of the verification performed by the plurality of first other nodes.

## Amended claims

### Amended claims in accordance with Rule 137(2) EPC.

1. A trade processing program, wherein
nodes manage a distributed ledger related to a financial asset, and the program that is for causing a computer of each of the nodes to execute a process, the process including
registering, in the distributed ledger, authorization transactions, the authorization transactions each including a transfer source account, a transfer destination account, a transfer amount of the financial asset, and a transfer time of the financial asset, and the authorization transactions each authorizing transfer of the financial asset based on a request from the transfer source account of the financial asset,
for an authorization transaction out of the registered authorization transactions for which a self node manages the transfer destination account, requesting a first other node to verify the authorization transaction after a management time managed by the self node has reached a transfer time included in the authorization transaction, and issuing a request transaction that requests transfer of a financial asset related to the authorization transaction based on a result of the verification performed by the first other node, and
returning, in a case where a request for verification of the authorization transaction is accepted from a second other node, to the second other node a result of the verification of whether the transfer time included in the authorization transaction is later than the management time,
wherein,
for an authorization transaction out of the registered authorization transactions for which a third other node manages the transfer destination account, in a case where a request transaction related to the authorization transaction has not been issued after a predetermined period of time has elapsed from a time at which the management time reaches a transfer time included in the authorization transaction, the issuing requests a fourth other node to verify the authorization transaction and issues, in place of the third other node, a request transaction related to the authorization transaction based on a result of the verification performed by the fourth other node.

2. The trade processing program according to claim 1, wherein
the issuing requests again the verification of the authorization transaction after a predetermined period of time has elapsed in a case where the issuing of the request transaction is denied base on the result of the verification performed by the first other node.

3. The trade processing program according to claim 1, wherein,
for the authorization transaction out of the registered authorization transactions for which the third other node that belongs to an identical group to a group of the self node manages the transfer destination account, the issuing issues, in place of the third other node, the request transaction related to the authorization transaction.

4. The trade processing program according to claim 1, wherein
a plurality of the first other nodes are provided, and
the issuing requests to the plurality of first other nodes to perform the verification and issues the request transaction based on results of the verification performed by the plurality of first other nodes.

5. A trade processing method comprising:
registering, by a computer of each nodes which manage a distributed ledger related to a financial asset, in the distributed ledger, authorization transactions, the authorization transactions each including a transfer source account, a transfer destination account, a transfer amount of the financial asset, and a transfer time of the financial asset, and the authorization transactions each authorizing transfer of the financial asset based on a request from the transfer source account of the financial asset,
for an authorization transaction out of the registered authorization transactions for which a self node manages the transfer destination account, requesting a first other node to verify the authorization transaction after a management time managed by the self node has reached a transfer time included in the authorization transaction, and issuing a request transaction that requests transfer of a financial asset related to the authorization transaction based on a result of the verification performed by the first other node, and
returning, in a case where a request for verification of the authorization transaction is accepted from a second other node, to the second other node a result of the verification of whether the transfer time included in the authorization transaction is later than the management time,
wherein,
for an authorization transaction out of the registered authorization transactions for which a third other node manages the transfer destination account, in a case where a request transaction related to the authorization transaction has not been issued after a predetermined period of time has elapsed from a time at which the management time reaches a transfer time included in the authorization transaction, the issuing requests a fourth other node to verify the authorization transaction and issues, in place of the third other node, a request transaction related to the authorization transaction based on a result of the verification performed by the fourth other node.

6. The trade processing method according to claim 5, wherein
the issuing requests again the verification of the authorization transaction after a predetermined period of time has elapsed in a case where the issuing of the request transaction is denied base on the result of the verification performed by the first other node.

7. The trade processing program according to claim 5, wherein,
for the authorization transaction out of the registered authorization transactions for which the third other node that belongs to an identical group to a group of the self node manages the transfer destination account, the issuing issues, in place of the third other node, the request transaction related to the authorization transaction.

8. The trade processing program according to claim 5, wherein
a plurality of the first other nodes are provided, and
the issuing requests to the plurality of first other nodes to perform the verification and issues the request transaction based on results of the verification performed by the plurality of first other nodes.

9. An information processing apparatus which manages a distributed ledger related to a financial asset comprising:
a computation device configured to execute a processing of:
registering, in the distributed ledger, authorization transactions, the authorization transactions each including a transfer source account, a transfer destination account, a transfer amount of the financial asset, and a transfer time of the financial asset, and the authorization transactions each authorizing transfer of the financial asset based on a request from the transfer source account of the financial asset,
for an authorization transaction out of the registered authorization transactions for which a self node manages the transfer destination account, requesting a first other node to verify the authorization transaction after a management time managed by the self node has reached a transfer time included in the authorization transaction, and issuing a request transaction that requests transfer of a financial asset related to the authorization transaction based on a result of the verification performed by the first other node, and
returning, in a case where a request for verification of the authorization transaction is accepted from a second other node, to the second other node a result of the verification of whether the transfer time included in the authorization transaction is later than the management time,
wherein,
for an authorization transaction out of the registered authorization transactions for which a third other node manages the transfer destination account, in a case where a request transaction related to the authorization transaction has not been issued after a predetermined period of time has elapsed from a time at which the management time reaches a transfer time included in the authorization transaction, the issuing requests a fourth other node to verify the authorization transaction and issues, in place of the third other node, a request transaction related to the authorization transaction based on a result of the verification performed by the fourth other node.

10. The information processing apparatus according to claim 9, wherein
the issuing requests again the verification of the authorization transaction after a predetermined period of time has elapsed in a case where the issuing of the request transaction is denied base on the result of the verification performed by the first other node.

11. The information processing apparatus according to claim 9, wherein,
for the authorization transaction out of the registered authorization transactions for which the third other node that belongs to an identical group to a group of the self node manages the transfer destination account, the issuing issues, in place of the third other node, the request transaction related to the authorization transaction.

12. The information processing apparatus according to claim 9, wherein
a plurality of the first other nodes are provided, and
the issuing requests to the plurality of first other nodes to perform the verification and issues the request transaction based on results of the verification performed by the plurality of first other nodes.
